(19) **Europäisches Patentamt / European Patent Office / Office européen des brevets**

(11) **EP 3 337 167 A1**

(12) **EUROPEAN PATENT APPLICATION**
published in accordance with Art. 153(4) EPC

(43) Date of publication:
**20.06.2018 Bulletin 2018/25**

(21) Application number: **16836443.8**

(22) Date of filing: **24.05.2016**

(51) Int Cl.:
**H04N 7/18** (2006.01)

(86) International application number:
**PCT/CN2016/083108**

(87) International publication number:
**WO 2017/028579 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.08.2015 CN 201510501653**

(71) Applicant: **Hangzhou Hikvision Digital Technology Co., Ltd.**
**Hangzhou 310051 (CN)**

(72) Inventors:
• **WANG, Yanxia**
  **Hangzhou**
  **Zhejiang 310051 (CN)**
• **LIAN, Bin**
  **Hangzhou**
  **Zhejiang 310051 (CN)**
• **CHEN, Shuyi**
  **Hangzhou**
  **Zhejiang 310051 (CN)**

(74) Representative: **Epping - Hermann - Fischer Patentanwaltsgesellschaft mbH**
**Schloßschmidstraße 5**
**80639 München (DE)**

(54) **CAMERA AND SURVEILLANCE SYSTEM FOR VIDEO SURVEILLANCE**

(57) The present application discloses a camera for video monitoring and a monitoring system. The camera comprises: a sensor device, configured to acquire monitoring direction information of the camera; a positioning device, configured to position a geographical location of the camera; a processor, configured to obtain a monitoring azimuth of the camera based on the monitoring direction information and determine a monitoring area of the camera based on the monitoring azimuth and the geographical location. The present application solves the technical problem of being unable to determine the monitoring area of a camera accurately, and achieves the effect that the camera can determine the monitoring area accurately.

Fig. 1

## Description

The present application claims the priority to a Chinese patent application No. 201510501653.2 filed with the State Intellectual Property Office of People's Republic of China on August 14, 2015 and entitled "CAMERA AND SURVEILLANCE SYSTEM FOR VIDEO SURVEILLANCE", which is incorporated herein by reference in its entirety.

## Technical Field

The present application relates to the field of video monitoring, and in particular, to a camera for video monitoring and a monitoring system.

## Background

In the prior art, when obtaining the position of a camera, the position information of the camera needs to be added for the camera manually by OSD (on-screen display, which is an adjustment way using an on-screen menu) or by a character-adding function. Not only does it take a large amount of human power to measure and calculate the position information, but also the position information obtained from the measurement and calculation is inaccurate. The monitoring area cannot be accurately determined with inaccurate position information.
Currently, no effective solution has been proposed for the above-described problem of being unable to determine accurately the monitoring area of a camera.

## Summary

Embodiments of the present application provide a camera for video monitoring and a monitoring system to solve at least the technical problem of being unable to determine accurately the monitoring area of a camera.
According to one aspect of embodiments of the present application, a camera for video monitoring is provided. The camera includes: a sensor device, configured to acquire monitoring direction information of the camera; a positioning device, configured to position a geographical location of the camera; a processor, configured to obtain a monitoring azimuth of the camera based on the monitoring direction information and determine a monitoring area of the camera based on the monitoring azimuth and the geographical location.
Further, the sensor device, the positioning device, and the processor are disposed on a main board, and a direction of setting an axis X of the sensor device is the same as a monitoring direction of a lens in the camera.
Further, the sensor device includes: a horizontal electronic compass, configured to detect a magnetic field intensity component in each axial direction at the location of the camera; a gravity sensor, configured to measure an acceleration component in each axial direction at the location of the camera, wherein, the monitoring direction information includes: magnetic field intensity components and acceleration components. The processor determines a tilt angle and a roll angle of the camera based on the acceleration components, and calculates the monitoring azimuth of the camera based on the magnetic field intensity components, the tilt angle, and the roll angle.
Further, the gravity sensor includes: a 3-axis angular velocity sensor and a 3-axis acceleration sensor.
Further, the horizontal electronic compass communicates with the processor via an I2C interface, and the gravity sensor communicates with the processor via an SPI interface.
Further, the sensor device includes: a 3-dimensional electronic compass including: a 3-axis accelerometer, configured to acquire acceleration components in three axial directions; a 3-axis magnetometer including three magnetic resistance sensors that are perpendicular to each other, wherein, a magnetic resistance sensor on each axial direction is configured to acquire a magnetic field intensity component in this axial direction.
The monitoring direction information includes: the magnetic field intensity components and the acceleration components. The processor determines a tilt angle and a roll angle of the camera based on the acceleration components, and calculates the monitoring azimuth of the camera based on the magnetic field intensity components, the tilt angle, and the roll angle.
Further, the 3-dimensional electronic compass communicates with the processor via an I2C interface.
Further, the processor includes: a reading device, configured to read a field-of-view angle of the lens of the camera from a memory; an image processing unit, configured to determine the monitoring area of the camera based on the tilt angle, the monitoring azimuth, and the field-of-view angle.
Further, the positioning device includes: an antenna and a GPS receiver. The GPS receiver receives navigational information from a navigational satellite via the antenna and determines the geographical location based on the navigational information.
Further, the GPS receiver communicates with the processor via a UART interface and/or an I2C interface.
Further, the processor is further configured to receive an image acquired by the camera, and superimpose information of the monitoring area onto the image to obtain a superimposed image.

According to another aspect of embodiments of the present application, a monitoring system is provided. The monitoring system includes any one of the cameras described above.

Further, the camera sends the information of the monitoring area and/or the superimposed image to an upper machine. The monitoring system further includes the upper machine. The upper machine, after receiving the information of the monitoring area information and/or the superimposed image, records the correspondence between the camera and the monitoring area and/or the superimposed image.

In embodiments of the present application, after the sensor device has obtained the monitoring direction information of the camera and the positioning device has obtained the geographical location information of the camera, the processor obtains the monitoring azimuth from the monitoring direction information, and then determines the monitoring area of the camera based on both the geographical location information and the monitoring azimuth. By using the above-described embodiments, the effect that the camera can specifically locate its own location and monitoring area is achieved, thus solving the technical problem of being unable to determine the monitoring area of the camera accurately.

**Brief Description of the Drawings**

The drawings described here are used to provide further understanding of the present application, and constitute part of the present application. The illustrative embodiments of the present application and description thereof are used to explain the present application, and do not constitute undue limitation on the present application. In the drawings:

Fig. 1 is a schematic view of a camera for video monitoring according to an embodiment of the present application;

Fig. 2 is a schematic view of the configuration of an optional sensor device according to an embodiment of the present application;

Fig. 3 is a schematic view of the configuration of an optional horizontal electronic compass according to an embodiment of the present application;

Fig. 4 is a schematic view of the configuration of an optional 3-dimensional electronic compass according to an embodiment of the present application;

Fig. 5 is a schematic view of an optional camera for video monitoring according to an embodiment of the present application;

Fig. 6 is a structural view of an optional 3-dimensional electronic compass according to an embodiment of the present application;

Fig. 7 is a schematic view of another optional camera for video monitoring according to an embodiment of the present application;

Fig. 8 is a schematic view of an optional monitoring azimuth $\alpha$ according to an embodiment of the present application;

Fig. 9 is a schematic view of a second optional monitoring azimuth $\alpha$ according to an embodiment of the present application;

Fig. 10 is a schematic view of an optional monitoring area according to an embodiment of the present application;

Fig. 11 is a schematic view of an optional monitoring system according to an embodiment of the present application.

**Detailed Description**

In order to enable those skilled in the art to better understand the solution of the present application, the technical solutions in embodiments of the present application will be described clearly and fully with reference to the accompanying drawings in embodiments of the present application. Evidently, the embodiments described are merely some of the embodiments of the present application, and not all of the embodiments. All other embodiments obtained by those skilled in the art based on the embodiments in the present application without creative efforts should all fall within the scope of protection of the present application.

It should be noted that, in the specification, claims and the above-described drawings of the present application, terms such as "first," "second" and the like are used to distinguish similar objects, and are not necessarily used to describe any specific order or ordered sequence. It should be understood that data used in this way are interchangeable in appropriate context so that the embodiments of the present application described here can be implemented in an order other than those illustrated or described. Moreover, the terms "include", "comprise" "have" or any other variants thereof are intended to cover a non-exclusive inclusion. For example, processes, methods, systems, products, or devices including a series of steps or units are not limited to those steps or units specified, but can include other steps or units not specified or inherent to those processes, methods, systems, products, or devices.

Explanation of terms:

GPS positioning: a GPS receiver receives data sent by a plurality of satellites. The data contains information such as ephemeris clock and satellite number. As the position of a satellite relative to the earth at a specific time is fixed, the distance between the receiver and the satellite can be calculated based on the ephemeris time difference when a signal arrives, and then information such as the specific location and the movement speed of the receiver can be known based on the combination of data of different satellites.

GPS (Global Positioning System): it is a satellite system composed of 24 satellites that cover the entire earth.

Magnetometer: it refers to various instruments that are configured to measuring a magnetic field, and is also called magnetic field meter or Gaussmeter. In the International System of Units, the physical quantity describing a magnetic field is the magnetic induction, the unit of which is Tesla (T). As IT means a very strong magnetic field, in the CGS system commonly used in engineering, the unit of the magnetic induction is Gauss. The magnetic induction is a vector with a magnitude and a direction. A magnetometer can test the magnetic field intensity and direction of the Earth's magnetic field at which a camera is located, and then determine the current angles of the camera with respect to the four directions of east, west, north, and south. The magnetometer has wide-spread application in real life. It can be embedded in hand-held cameras that need a compass function to serve as high-performance cameras and navigational cameras with magnetic field sensing.

CGS System (Centimeter-Gram-Second System of Units): it is a system of units based on the centimeter, gram, and second, and is generally used in gravity subjects and related mechanics subjects.

Electronic compass: it is also called digital compass, and is widely used as navigational instrument or posture sensor. Compared to traditional pointer-type and balance-structure compasses, electronic compasses consume little energy, have a small volume, a light weight, and a high precision, and can be miniaturized. Output signals of the electronic compasses can be displayed digitally after being processed. Electronic compasses can be classified into horizontal electronic compasses and 3-dimensional electronic compasses. A horizontal electronic compass requires a user to maintain the compass horizontally when in use. Otherwise, when the compass inclines, it may show the navigational direction changes while the navigational direction has not changed. A 3-dimensional electronic compass has an inclination correction sensor therein, thus overcoming the strict limitation of a horizontal electronic compass when in use. When an electronic compass inclines, an inclination sensor can provide inclination compensation to the compass. Thus, even if the compass inclines, navigational data is still accurate.

G-sensor: it is a gravity sensor (or acceleration sensor). It can sense the change of an acceleration force, which is a force exerted on an object when the object is in the course of accelerating. Various movement changes, such as swinging, falling, rising, and dropping, can be converted by a G-sensor into an electronic signal, and then after calculation and analysis of a microprocessor, be outputted to a central processing unit (CPU, processor). The acceleration of a camera is detected, and is further configured to determine the tilt angle of the camera or detect a free-falling object.

Visible area: it means an area that can be seen. For a monitoring camera, the visible area is the area that can be monitored by the camera. A camera with this function, in conjunction with an application software that has map data, can display a monitoring area on a map.

According to embodiments of the present application, an embodiment of a camera for video monitoring is provided.

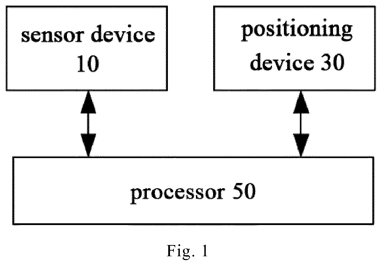

Fig. 1 is a schematic view of a camera for video monitoring according to an embodiment of the present application. As shown in Fig. 1, the camera includes: a sensor device 10, a positioning device 30, and a processor 50.

The sensor device 10 is configured to acquire monitoring direction information of the camera.

The positioning device 30 is configured to position a geographical location of the camera.

The processor 50 is configured to obtain a monitoring azimuth $\alpha$ of the camera based on the monitoring direction information and determine a monitoring area of the camera based on the monitoring azimuth $\alpha$ and the geographical location.

In the present application, after the sensor device has obtained the monitoring direction information of the camera and the positioning device has obtained the geographical location information of the camera, the processor obtains the monitoring azimuth $\alpha$ from the monitoring direction information, and then determines the monitoring area of the camera based on the geographical location information and the monitoring azimuth $\alpha$. With the above-described embodiment, the monitoring area of the camera can be determined accurately based on accurate location and direction information of the camera obtained by the sensor device and the positioning device, so that errors caused by manual measurement and calculation are avoided, thus solving the problem of being unable to determine the monitoring area of the camera accurately, and achieving the effect of being able to determine accurately the monitoring area of the camera.

With the embodiment, after the monitoring area of the camera has been accurately determined, all-direction monitoring without blind spots can be achieved based on the monitoring area, and overlapping placement of monitoring cameras in the same monitoring area can be avoided. Searching can be performed based on an area. That is, according to video data of an area to be monitored, the camera monitoring the area can be directly found.

The camera in the embodiment can be called a camera supporting a visible area, and the monitoring area is a limited spatial range monitored by the camera in the geographical location.

Optionally, the sensor device, the positioning device, and the processor can be disposed on a main board, a direction of setting an axis X of the sensor device is the same as a monitoring direction of a lens in the camera.

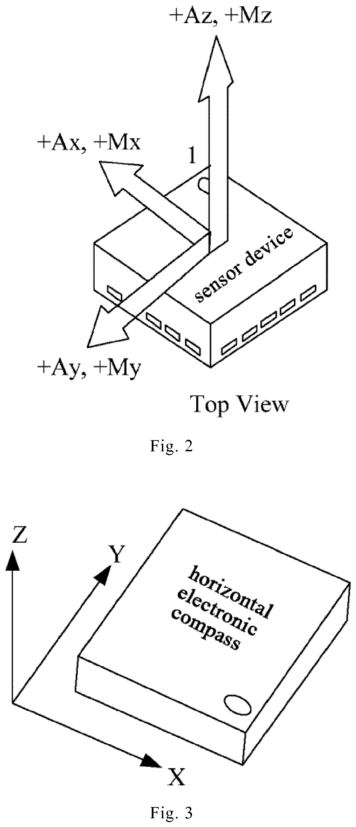

Specifically, as shown in Fig. 2, in the top view of the sensor device (i.e. the top view shown in Fig. 2), to take account of software compatibility and to ensure that angle information outputted by the sensor device do not require $\pm 180°$ or $\pm 90°$ compensation, the direction of setting the axis X of the sensor device (the direction of the arrow (+Ax, +Mx) as shown in Fig. 2) is set to be the same as the monitoring direction of the lens of the camera. Definite information about the direction of setting the axis X of the sensor device can be obtained from data manuals of various sensors. Information on correct directions of setting an electronic compass and an acceleration sensor on a printed circuit board (PCB) is described below respectively.

The direction +Ax, +Mx indicates the acceleration component and the magnetic field intensity component in this direction have positive values; "1" in Fig. 2 refers to a indicator of a pin 1 of the chip.

A spatial Cartesian coordinate system can be established by using the center location of the sensor device as the origin, i.e., axis X, axis Y, and axis Z can be established. As shown in Fig. 2, the axis Y of the sensor device is as indicated by the arrow (+Ay, +My) in the figure, the axis Z of the sensor device is as indicated by the arrow (+Az, +Mz) in the figure. The model of the sensor device can be FXOS8700CQ.

The sensor device in the above-described embodiment can include an electronic compass. Electronic compasses can be classified into horizontal electronic compasses and 3-dimensional electronic compasses.

As shown in Fig. 3, when the electronic compass is a horizontal electronic compass, the direction of setting the axis X of the horizontal electronic compass (the direction of the axis X in Fig. 3) is the same as the direction of the lens of the camera. The model of the horizontal electronic compass can be AK09911. The direction of setting the axis Y of the horizontal electronic compass is the direction of the axis Y in Fig. 3, and the direction of setting the axis Z of the horizontal electronic compass is the direction of the axis Z in Fig. 3. The axis X, axis Y, and axis Z of the horizontal electronic compass are perpendicular to each other, and form a spatial Cartesian coordinate system.

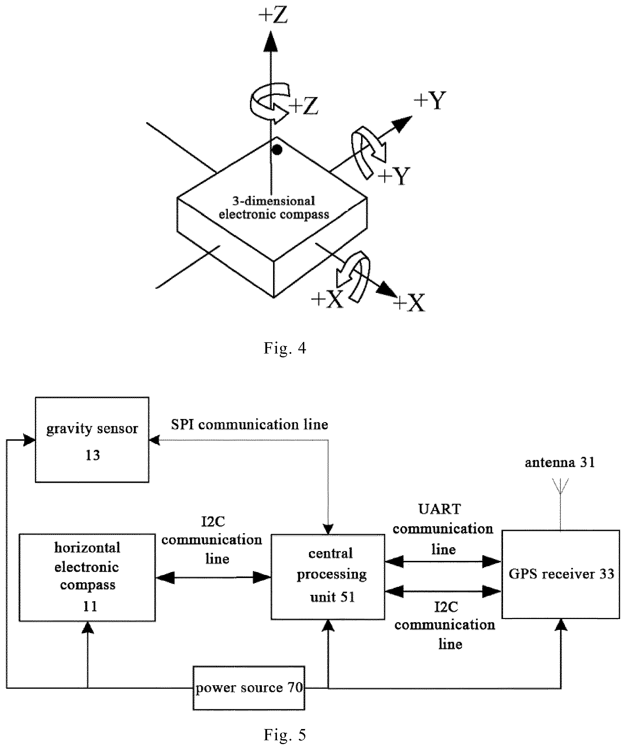

As shown in Fig. 4, when the electronic compass is a 3-dimensional electronic compass, the direction of setting the axis X of the 3-dimensional electronic compass (the direction of the axis +X in Fig. 4) is the same as the direction of the lens of the camera. The model of the 3-dimensional electronic compass can be MPU-6500. The direction of setting the axis Y of the 3-dimensional electronic compass is the direction of the axis +Y in Fig. 4, and the direction of setting the axis Z of the 3-dimensional electronic compass is the direction of the axis +Z in Fig. 4. The axis X, axis Y, and axis Z of the 3-dimensional electronic compass are perpendicular to each other, and form a spatial Cartesian coordinate system.

Optionally, the sensor device includes: a horizontal electronic compass, configured to detect a magnetic field intensity component in each axial direction at the location of the camera; a gravity sensor, configured to measure an acceleration component in each axial direction at the location of the camera, wherein, the monitoring direction information includes: magnetic field intensity components and acceleration components. The processor determines a tilt angle $\Phi$ and a roll angle $\theta$ of the camera based on the acceleration components, and calculates the monitoring azimuth $\alpha$ of the camera based on the magnetic field intensity components, the tilt angle $\Phi$, and the roll angle $\theta$.

In the embodiment, the monitoring camera can use the horizontal electronic compass to determine the magnetic field intensity component in each axial direction at the location thereof, and use a G-sensor (i.e., gravity sensor) to determine the monitoring tilt angle $\Phi$ and roll angle $\theta$. The processor combines and processes the magnetic field intensity components, tilt angle $\Phi$ and roll angle $\theta$ to obtain the monitoring azimuth $\alpha$. The range of the visible area monitored by the camera (i.e., the monitoring area) can be quickly and accurately depicted.

Optionally, the gravity sensor can include: a 3-axis angular velocity sensor, and a 3-axis acceleration sensor.

In the embodiment, after the sensor device has obtained the monitoring direction information of the camera, the 3-axis angular velocity sensor and the 3-axis acceleration sensor in the gravity sensor obtain, respectively, information of the monitoring tilt angle $\Phi$ and the roll angle $\theta$, and the processor obtains the monitoring azimuth $\alpha$ from the monitoring direction information, and then determines the monitoring area of the camera based on the monitoring azimuth $\alpha$, and the information of the monitoring tilt angle $\Phi$ and the roll angle $\theta$ (i.e., geographical location information). By using the above-described embodiment, the geographical location information can be obtained more accurately, thus making the information of the monitoring area obtained more accurate.

Optionally, the horizontal electronic compass can communicate with the processor via an I2C interface, and the gravity sensor communicates with the processor via an SPI interface.

The principle of the embodiment is as shown in Fig. 5. A power source 70 supplies power to a horizontal electronic compass 11, a gravity sensor 13, a central processing unit 51, and a GPS receiver 33. The horizontal electronic compass 11 communicates with the central processing unit 51 via a I2C interface and a I2C communication line in Fig. 5. The central processing unit 51 is connected to the GPS receiver 33 via a UART communication line and/or a I2C communication line. The GPS receiver 33 is connected to an antenna 31. The gravity sensor 13 is connected to the central processing unit 51 via an SPI communication line.

Specifically, a horizontal electronic compass, a GPS receiver, and a G-sensor (i.e., gravity sensor) can be used to determine the monitoring area of the camera.

The GPS module (i.e., the GPS receiver) can use an NEO-6M positioning chip of U-blox. This positioning chip supports the GPS navigation function, which is achieved by the control of the GPS receiver by the central processing unit, and can communicate with the GPS receiver via a UART communication line (based on different requirements, an I2C communication line, SPI communication line, or USB communication line can also be used) to configure an operating mode of the GPS receiver. In normal operation of the GPS receiver, data from a navigational satellite, mainly containing information such as the satellite number and ephemeris clock, is received via the antenna. The distance between the GPS receiver and the satellite can be calculated based on an ephemeris time difference when a signal arrives, and by combining data of multiple satellites (generally more than four satellites), the specific location of the GPS receiver, including longitude, latitude, and altitude, can be known. Then, the GPS receiver sends the data to the central processing unit (CPU, i.e., processor) via a data interface such as the above-mentioned UART (e.g., the UART communication line in Fig. 5). The central processing unit (CPU, i.e, processor) then obtains information on the specific position of the camera. The positioning error caused by using this method can be within 10 m. In addition, based on different application backgrounds, the camera is also compatible with other navigational systems, including the BeiDou system of China, the GNSS system of Russia, the Galileo navigational system of Europe, and the like.

The horizontal electronic compass can be an AKM's horizontal electronic compass of Model No. AK09911. One 3-axis (including axis X, axis Y, and axis Z) magnetometer with 14 bit AD conversion is integrated in this horizontal electronic compass. This horizontal electronic compass can detect a maximum magnetic induction of $\pm 4900 \, \mu T$, and a minimum magnetic induction change of $9800 \, \mu T/214$ (i.e., $0.60 \, \mu T$), and support I2C communication. The magnetometer can limit the error range of the angles of the camera with respect to the directions of east, west, north, and south during installation of the camera, to be within $\pm 5°$. In actual application, data outputted by the horizontal electronic compass to the processor is the magnetic field intensity component of each of the axes, which undergoes AD conversion and then is provided to the processor in the form of digital signal. If only a horizontal electronic compass is used, the angles of the camera with respect to the directions of east, west, north, and south can be determined only when the camera is parallel to the horizontal plane. When the camera inclines, errors in angle determination will occur if the compass is used only. Therefore, an accelerometer needs to be added to calculate the tilt angle $\Phi$ for compensation.

The G-sensor (i.e., the gravity sensor in the sensor device, which is also called an acceleration sensor) can be an Invensense's G-sensor of the Model No. MPU-6500. A 3-axis angular velocity sensor and a 3-axis acceleration sensor are integrated in this chip. Here, the 3-axis acceleration sensor is mainly used. The 3-axis acceleration sensor outputs acceleration components on three axes to the processor. These acceleration components are transmitted to the processor in the form of digital signal after AD conversion. The range of the acceleration sensor can be selected from $\pm 2g$, $\pm 4g$, $\pm 8g$, and $\pm 16g$. If the range of $\pm 2g$ is selected in actual use, the acceleration sensor performs internally 16 bit AD conversion on the components, and then transmits them to the CPU digitally. The tilt angle $\Phi$ of the camera can be calculated with a software algorithm, and the error range in determination of the tilt angle $\Phi$ can be limited to $\pm 1°$. This chip supports both SPI and I2C communication modes. The default is the SPI communication mode.

Optionally, the sensor device includes: a 3-dimensional electronic compass including a 3-axis accelerometer and a 3-axis magnetometer.

The 3-axis accelerometer is configured to acquire the acceleration components of the three axial directions.

The 3-axis magnetometer includes three magnetic resistance sensors that are perpendicular to each other, wherein, a magnetic resistance sensor on each axial direction is configured to acquire a magnetic field intensity component of the axial direction, wherein, the monitoring direction information includes: magnetic field intensity components and the acceleration components

The processor determines a tilt angle $\Phi$ and a roll angle $\theta$ of the camera based on the acceleration components, and calculates the monitoring azimuth $\alpha$ of the camera based on the magnetic field intensity components, the tilt angle $\Phi$, and the roll angle $\theta$.

Optionally, the 3-dimensional electronic compass communicates with the processor via an I2C interface.

Specifically, a 3-dimensional electronic compass and a GPS module (i.e., positioning device) can be used to determine the monitoring area of the camera.

The GPS module (i.e., the GPS receiver) can use the NEO-6M positioning chip of U-blox. Its operating principle will not be repeated here.

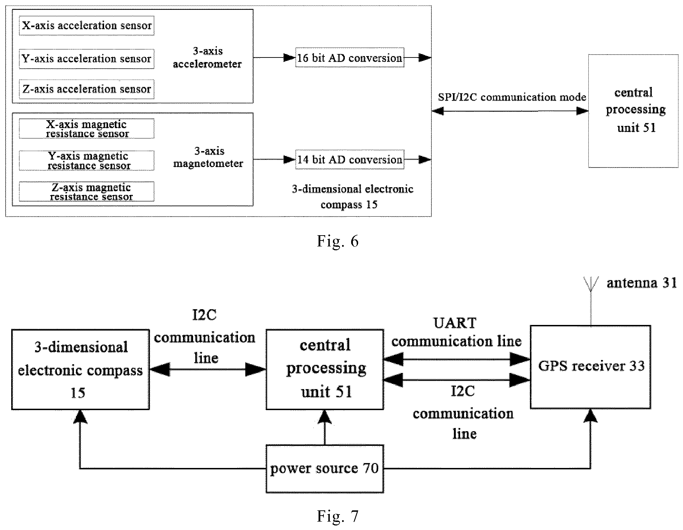

As shown in Fig. 6, the 3-dimensional electronic compass can be a Freescale's electronic compass of the Model No. FXOS8700CQ. The 3-dimensional electronic compass 15 of Model No. FXOS8700CQ includes inside a 3-axis accelerometer and a 3-axis magnetometer. The 3-axis accelerometer includes an X-axis acceleration sensor, a Y-axis acceleration sensor, and a Z-axis acceleration sensor, which acquire the acceleration components on the three axial directions of the axis X, axis Y, and axis Z, respectively. The 3-axis magnetometer includes an X-axis magnetic resistance sensor, a Y-axis magnetic resistance sensor, and a Z-axis magnetic resistance sensor, which acquire the magnetic field intensity components on the axis X, axis Y, and axis Z, respectively. The 3-axis accelerometer performs internally 16 bit AD conversion (i.e., 16-bit analog to digital conversion) on the acceleration components and then digitally outputs them to the central processing unit 51, and the 3-axis magnetometer performs internally 14 bit AD conversion (i.e., 14-bit analog to digital conversion) on the magnetic field intensity components and then outputs digitally them to the central processing unit 51. The 3-dimensional electronic compass supports both SPI and I2C communication modes. The default is the SPI communication mode.

The operating principle of a 3-dimensional electronic compass is as shown in Fig. 7. A power source 70 supplies power to the 3-dimenstional electronic compass 15, the central processing unit 51, and the GPS receiver 33. The 3-dimensional electronic compass 15 communicates with the central processing unit 51 via a I2C communication line as shown in Fig. 7. The central processing unit 51 communicates with the GPS receiver 33 via a UART communication line and/or a I2C communication line as shown in Fig. 7. The GPS receiver 33 is connected to an antenna 31.

Specifically, the 3-dimentional electronic compass of Model No. FXOS8700CQ uses a small packaging of 3x3x1.2 mm of Quad Flat No-lead Package (QFN), has extremely low power consumption, and takes up few resources in an Internet-Process Communication (IPC) camera. One 3-axis accelerometer with 16 bit AD conversion (i.e., analog to digital conversion) and one 3-axis magnetometer with 14 bit AD conversion (i.e., analog to digital conversion) are integrated in the chip of the 3-dimensional electronic compass. Information acquired by the 3-axis accelerometer is the acceleration information on the three axes, and the 3-axis accelerometer performs an AD conversion (i.e., analog to digital conversion) on the information acquired and then sends it to the processor (i.e, the central processing unit 51).

The magnetometer (i.e., 3-axis magnetometer) can use three magnetic resistance sensors that are perpendicular to each other, wherein, a magnetic resistance sensor in each axial direction acquires the Earth's magnetic field intensity component in this axial direction. The sensor internally performs AD conversion on the analog output signal produced by the sensor, and outputs it to the central processing unit of the camera to determine the placement azimuth of the camera. The central processing unit (CPU) can control the 3-dimensional electronic compass of Model No. FXOS8700CQ in both I2C and SPI communication modes. The default is the SPI communication mode. The accelerometer can measure a maximum acceleration of $\pm 2g/\pm 4g/\pm 8g$, and the magnetometer (i.e., the 3-axis magnetometer) can detect a maximum magnetic induction intensity of $\pm 1200~\mu T$. For the condition of a static installation on the surface of the earth only, without taking special application conditions such as overweight and weightlessness into consideration, $\pm 2g$ as the maximum measurable acceleration of the accelerometer is sufficient to meet requirements. The minimum acceleration change that can be detected on each axis is 4000 mg/216 (i.e., 0.06 mg). The data error range of the tilt angle $\Phi$ in installing the camera can be controlled to be within $\pm 1°$. The magnetometer inside the 3-dimensional electronic compass 15 of Model No. FXOS8700CQ can sense a magnetic field in the range of $\pm 1200~\mu T$. The intensity of the Earth's magnetic field is very low, about 0.5-0.6 Gauss, that is, 5-6*E-5 Tesla (50-60 $\mu T$). To meet the application requirements of the camera, the minimum magnetic induction intensity change that can be detected by the magnetometer on each axis is 2400 $\mu T$/214 (i.e., 0.15 $\mu T$). The magnetometer can control the error range of the angles of the camera with respect to the directions of east, west, north, and south to be within $\pm 5°$ when the camera is installed.

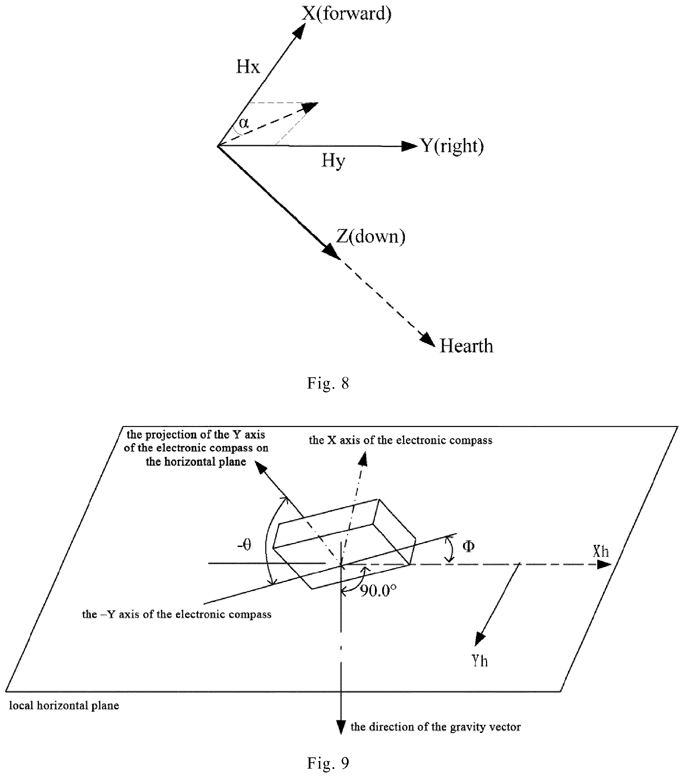

The determination of the monitoring azimuth $\alpha$ is described briefly with reference to Fig. 8 and Fig. 9 below.

As shown in Fig. 8, when an electronic compass is maintained in parallel with the local horizontal plane, which is a horizontal plane at the location of the camera, the monitoring azimuth $\alpha$ (i.e., the angle $\alpha$ between the magnetic north and the direction of the axis X, or the angle of deviation of the electronic compass) is:

$$\alpha = \arctan\left(\frac{Hy}{Hx}\right)$$

As shown in Fig. 8, the direction of the local magnetic field lines (the direction of Hearth in Fig. 8, which is the direction toward the ground) is the same as the axis Z direction in the three axial directions of the electronic compass; the plane formed by the axis X (i.e. the direction of setting the axis X of the electronic compass) and the axis Y (i.e. the direction of setting the axis Y of the electronic compass) in the three axial directions of the electronic compass is parallel to the horizontal plane of the area where the camera is located, and perpendicular to the axis Z (i.e. the direction of setting the axis Z of the electronic compass) in the three axial directions of the electronic compass; the local magnetic field intensity components Hx, Hy and Hz are, respectively, the components of the local magnetic induction intensity on the axis X (the direction forward in Fig. 8, which is the forward direction), axis Y (the direction right in Fig. 8, which is the rightward direction), and axis Z (the direction down in Fig. 8, which is the downward direction) of the electronic compass.

As shown in Fig. 9, when there is an angle between the electronic compass and the local horizontal plane (i.e., the tilt angle $\Phi$, as $\Phi$ in Fig. 9), the angle between the axis Y (i.e., the direction of setting the axis Y of the electronic compass) of the electronic compass and the local horizontal plane is the roll angle $\theta$ as shown in Fig. 9. The tilt angle $\Phi$ and the roll angle $\theta$ can be detected by accelerometers. Their calculation formulas are as follows:

$$H_x = X_M \cos(\phi) + Y_M \sin(\phi)\sin(\theta) - Z_M \sin(\phi)\cos(\theta)$$

$$H_y = Y_M \cos(\theta) + Z_M \sin(\theta)$$

wherein $X_M$ is the magnetic induction intensity component of the axis X of the electronic compass, $Y_M$ is the magnetic induction intensity component of the axis Y of the electronic compass, and $Z_M$ is the magnetic induction intensity component of the axis Z of the electronic compass.

Based on the components Hx and Hy of the local magnetic induction intensity on the axis X and axis Y of the electronic compass (i.e., the directions of setting the axis X and axis Y of the electronic compass, as the axis X and axis Y in Fig. 9), the monitoring azimuth $\alpha$ of the camera can be calculated:

$$\alpha = \arctan\left(\frac{Hy}{Hx}\right)$$

wherein the tilt angle $\Phi$ is the tilt angle of the camera calculated by the magnetometer, which is the angle between the plane formed by the directions of setting the axis X and axis Y of the electronic compass and the local horizontal plane, and can be denoted also by Pitch.

The roll angle $-\theta$ is the angle between the direction of setting the axis Y of the electronic compass (the direction of the axis -Y in Fig. 9) and the local horizontal plane (the projection of the axis Y of the electronic compass on the horizontal plane as shown in Fig. 9), and can be denoted also by Roll.

Specifically, as shown in Fig. 9, the direction of setting the axis X of the electronic compass, the direction of setting the axis Y of the electronic compass, and the direction of setting the axis Z of the electronic compass are perpendicular to each other. The angle between the direction of the gravity vector and the local horizontal plane is 90°. The direction of the X-axis component of the magnetic field is the direction Xh as shown in Fig. 9, and the direction of the Y-axis component of the magnetic field is the direction Yh as shown in Fig. 9.

Based on the above, the geographical location of the camera (e.g., the latitude and longitude) can obtained specifically by the positioning function of the positioning device to determine the position information of the camera on the Earth. The monitoring direction information of the camera (e.g., the tilt angle $\Phi$, the roll angle $\theta$, and the monitoring azimuth $\alpha$) can be accurately detected by the sensor device. By combining the angle of installing the camera (i.e., the tilt angle $\Phi$) and the field-of-view range of the lens, the IPC camera can get the range of the area monitored by the camera, thus achieving the visible area function of the camera.

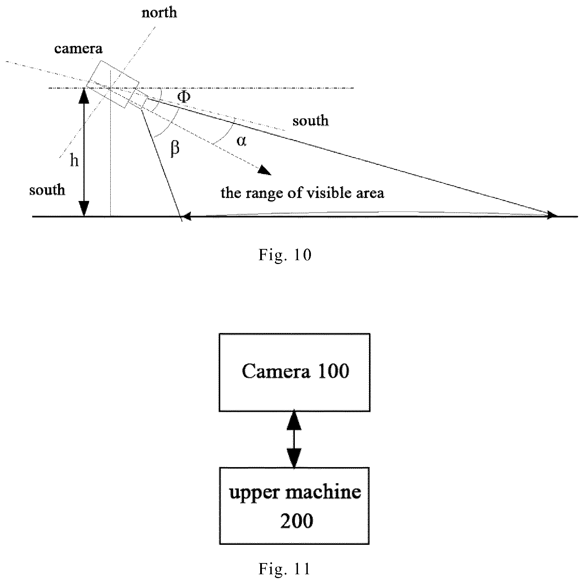

As shown in Fig. 10, to be able to achieve actually monitoring effect, the electronic compass and the G-sensor (i.e., the gravity sensor) can detect an angle of east by south $\alpha$ of the camera (i.e., the monitoring azimuth $\alpha$), wherein, the east by south can be determined by the directions of east, south, and north as shown in Fig. 10. The lens can be detected by the G-sensor (i.e., the gravity sensor) to be inclining downward with an angle of $\Phi$. With the field-of-view angle $\beta$ of the camera known, the range of the visible area as shown in Fig. 10 can be obtained by calculation very easily. The field-of-view angle $\beta$ is the field-of-view angle range of the lens installed in the camera, which is a parameter of the camera. The larger the field-of-view angle of the lens is, the larger the range of the field of view (i.e., the range of the visible area) is.

Optionally, the processor includes: a reading device and an image processing unit.

The reading device is configured to read the field-of-view angle of the lens of the camera from a memory. The image processing unit is configured to determine the monitoring area of the camera (i.e., the range of the visible area as shown in Fig. 10) based on the tilt angle $\Phi$, the monitoring azimuth $\alpha$, the field-of-view angle $\beta$, and the height (h as shown in Fig. 10) of the lens of the camera from the ground.

Optionally, the positioning device includes: an antenna and a GPS receiver, wherein, the GPS receiver receives navigational information from a navigational satellite via the antenna and determines the geographical location based on the navigational information.

In the embodiment, in normal operation of the GPS receiver, data received from a navigational satellite via the antenna mainly includes information such as the satellite number and ephemeris clock. The distance between the GPS receiver and the satellite can be calculated based on the ephemeris time difference when a signal arrives. By combining data of multiple satellites (generally more than four satellites), the specific location of the GPS receiver, including longitude, latitude, and altitude, can be known.

Optionally, the GPS receiver communicates with the processor via a UART interface and/or an I2C interface.

Specifically, for visible-area cameras, the number of cameras to be used can be obtained by calculation based on deployment areas, so as to avoid overlapping deployment and waste of resources. When a relevant division needs to call up the video materials of a particular area, the camera monitoring that area can be very easily found, increasing the work efficiency of the relevant division. The information of the monitoring area collected by visible-area cameras worldwide can be called up, achieving global monitoring without blind spots.

Optionally, the processor is further configured to receive an image acquired by the camera, and superimpose monitoring area information onto the image to obtain a superimposed image.

The information of the monitoring area in the embodiment can include the monitoring direction information and geographical location information of a camera, and specifically, can include the magnetic field intensity component in each axial direction at the location of the camera, the acceleration component in each axial direction at the location of the camera, the tilt angle $\Phi$, the monitoring azimuth $\alpha$, the field-of-view angle $\beta$, and the height of the camera from the ground.

In the embodiment, an image is acquired by the lens of the camera and sent to the processor. The processor, after receiving the image, superimposes the information of the monitoring area on the image to obtain a superimposed image. By using the embodiment, the processor can perform further information comparison and analysis on the image acquired, achieving the effect of calculating the number of cameras to be deployed within a monitoring area based on the information superimposed on the image.

According to embodiments of the present application, an embodiment of a monitoring system is provided. The monitoring system includes a camera in any of the embodiments described above.

With the present application, after the sensor device of the camera in the monitoring system has obtained the monitoring direction information of the camera and the positioning device of the camera in the monitoring system has obtained the geographical location information of the camera, the processor obtains the monitoring azimuth $\alpha$ from the monitoring direction information, and then determines the monitoring area of the camera based on both the geographical location information and the monitoring azimuth $\alpha$. The processor in the monitoring system, after receiving the image of the lens of the camera, superimposes the information of the monitoring area on the image to obtain an image with the superimposed information. By using the above-described embodiment, the monitoring area of the camera can be determined accurately, avoiding errors caused by manual measurement and calculation, and all-direction monitoring without blind spots can be achieved based on the monitoring area, and overlapping placement of monitoring cameras in the same monitoring area can be avoided. Searching can be performed by area. That is, according to video data of an area to be monitored, the camera monitoring the area can be directly found.

Specifically, the camera in the monitoring system can calculate the number of cameras to be used in the monitoring system based on deployment areas and the image superimposed with the information of the monitoring area, so as to avoid overlapping deployment of cameras in the monitoring system and waste of resources. When a relevant division needs to call up the video materials of a particular area, the camera monitoring this area can be very easily found, increasing the work efficiency of the relevant division. For the whole world, the monitoring system can achieve the effect of global deployment without blind spots of the monitoring system's camera(s), by calling up monitoring area information collected by cameras and by the superimposed image and other analysis by the processor.

Optionally, the camera can send the information of the monitoring area and/or the superimposed image to an upper machine. The monitoring system further includes the upper machine. The upper machine, after receiving the information of the monitoring area and/or the superimposed image, records the correspondence between the camera and the monitoring area and/or the superimposed image.

In the embodiment, the monitoring system can include one or more cameras 100 and one or more upper machines 200. Fig. 11 shows only an embodiment of the monitoring system that includes one camera 100 and one upper machine 200. After the camera acquires an image and superimposes monitoring information on the image to obtain the superimposed image, the camera can send the information of the monitoring area to the upper machine, or the camera can send the superimposed image to the upper machine, or the camera can send the information of the monitoring area and the superimposed image to the upper machine. The upper machine, after receiving information sent by the camera, records the correspondence between the camera and the information sent by the camera.

With the embodiment, information of the specific location and monitoring area of each camera in the monitoring system can be effectively determined, and the range of the monitoring area of the monitoring system and whether there is any blind spot can be determined. Moreover, the number of cameras to be used in the monitoring system can be obtained by analysis and calculation based on the correspondence and the areas that actually need to be deployed, so as to avoid overlapping deployment of cameras in the monitoring system. When a relevant division needs to call up the video materials of a particular area, the camera monitoring this area can be very easily found based on the recorded correspondence between the camera and the monitoring area and the superimposed image, increasing the work efficiency of the relevant division. For the whole world, the monitoring system can achieve the effect of global deployment without blind spots of the monitoring system's camera(s), by calling up the correspondence between the camera and the monitoring area and the superimposed image recorded by the monitoring system and performing analysis and the like on this correspondnece.

The sequence number of the above-described embodiments in the present application is merely for description purposes, and does not represent which one is better or worse.

In the above-described embodiments of the present application, the description of each embodiment has its own focus. A part in an embodiment, which is not described in detail, can refer to the relevant description in other embodiments.

In the several embodiments provided in the present application, it should be understood that the technical contents disclosed can be implemented in other ways. The device embodiments described above are merely illustrative. For example, the classification of units can be a classification based on logical function. In practice, they can be classified in another way. For example, multiple units or components can be combined or integrated into another system, or some features can be omitted, or not executed. In addition, the inter-coupling or direct coupling or communicative connection illustrated or discussed can be coupling or connection by certain interfaces, and indirect coupling or communicative connection between units or modules can be electric or other forms.

Units described as separate parts can be or not be physically separated. Parts illustrated as a unit can be or not be a physical unit (i.e., located at one location), or be distributed on multiple units. Some or all of the parts can be selected based on actual requirements to achieve the objective of the solution of the present embodiments.

In addition, the various functional units in all the embodiments of the present application can be integrated into one processing unit, or can exist physically separately, or two or more units can be integrated into one unit. The integrated units can be implemented as hardware, or can be implemented as software functional units.

If an integrated unit is implemented as a software functional unit, and sold or used as a separate product, it can be stored in a computer readable storage medium. Based on this understanding, the essence of the technical solution of the present application, or the part that constitutes contribution to the prior art, or all or part of the technical solution, can be embodied in a software product. The computer software product is stored in a storage medium, and includes instructions configured to making a computer device (which can be a personal computer, a server, a network device, etc.) execute all or some of the steps of a method described in all the embodiments of the present application. The storage medium includes various medium capable of storing program code such as flash disk, Read-Only Memory (ROM), Random Access Memory (RAM), portable disk, magnetic disk, and optical disk.

The description above is merely preferred implementation of the present application. It should be noted that for those skilled in the art, improvements and changes may be made without departing from the principle of the present application, and such improvements and changes should be deemed to fall within the scope of protection of the present application.

## Claims

1. A camera for video monitoring, comprising:

   a sensor device, configured to acquire monitoring direction information of the camera;
   a positioning device, configured to position a geographical location of the camera;
   a processor, configured to obtain a monitoring azimuth of the camera based on the monitoring direction information and determine a monitoring area of the camera based on the monitoring azimuth and the geographical location.

2. The camera of claim 1, wherein, the sensor device, the positioning device, and the processor are disposed on a main board, and a direction of setting an axis X of the sensor device is the same as a monitoring direction of a lens in the camera.

3. The camera of claim 1, wherein, the sensor device comprises:

   a horizontal electronic compass, configured to detect a magnetic field intensity component in each axial direction at the location of the camera;

a gravity sensor, configured to measure an acceleration component in each axial direction at the location of the camera,

wherein, the monitoring direction information comprises: magnetic field intensity components and acceleration components;

the processor determines a tilt angle and a roll angle of the camera based on the acceleration components, and calculates the monitoring azimuth of the camera based on the magnetic field intensity components, the tilt angle, and the roll angle.

4. The camera of claim 3, wherein, the gravity sensor comprises: a 3-axis angular velocity sensor and a 3-axis acceleration sensor.

5. The camera of claim 3, wherein, the horizontal electronic compass communicates with the processor via an I2C interface, and the gravity sensor communicates with the processor via an SPI interface.

6. The camera of claim 1, wherein, the sensor device comprises: a 3-dimensional electronic compass comprising:

a 3-axis accelerometer, configured to acquire acceleration components in three axial directions;
a 3-axis magnetometer comprising three magnetic resistance sensors that are perpendicular to each other, wherein a magnetic resistance sensor on each axial direction is configured to acquire a magnetic field intensity component in this axial direction, wherein the monitoring direction information comprises: magnetic field intensity components and the acceleration components;
the processor determines a tilt angle and a roll angle of the camera based on the acceleration components, and calculates the monitoring azimuth of the camera based on the magnetic field intensity components, the tilt angle, and the roll angle.

7. The camera of claim 6, wherein, the 3-dimensional electronic compass communicates with the processor via an I2C interface.

8. The camera of claims 3 or 6, wherein, the processor comprises:

a reading device, configured to read a field-of-view angle of a lens of the camera from a memory;
an image processing unit, configured to determine the monitoring area of the camera based on the tilt angle, the monitoring azimuth, and the field-of-view angle.

9. The camera of claim 1, wherein, the positioning device comprises:

an antenna;
a GPS receiver, configured to receive navigational information from a navigational satellite via the antenna and determine the geographical location based on the navigational information.

10. The camera of claim 9, wherein, the GPS receiver communicates with the processor via a UART interface and/or an I2C interface.

11. The camera of claim 1, wherein, the processor is further configured to receive an image acquired by the camera, and superimpose information of the monitoring area onto the image to obtain a superimposed image.

12. A monitoring system comprising the camera of any one of claims 1 to 11.

13. The monitoring system of claim 12, wherein,
the camera sends the information of the monitoring area and/or the superimposed image to an upper machine;
the monitoring system further comprises the upper machine, and the upper machine, after receiving the information of the monitoring area and/or the superimposed image, records the correspondence between the camera and the monitoring area and/or the superimposed image.

Fig. 1

+Az, +Mz

+Ax, +Mx

1

+Ay, +My

sensor device

Top View

Fig. 2

Z

Y

X

horizontal electronic compass

Fig. 3

Fig. 4

Fig. 5

X-axis acceleration sensor

Y-axis acceleration sensor — 3-axis accelerometer → 16 bit AD conversion →

Z-axis acceleration sensor

SPI/I2C communication mode → central processing unit 51

X-axis magnetic resistance sensor

Y-axis magnetic resistance sensor — 3-axis magnetometer → 14 bit AD conversion →

Z-axis magnetic resistance sensor

3-dimensional electronic compass 15

Fig. 6

antenna 31

3-dimensional electronic compass 15 ← I2C communication line → central processing unit 51 ← UART communication line → GPS receiver 33

← I2C communication line →

power source 70

Fig. 7

15

Fig. 8

Fig. 9

Fig. 10

Fig. 11

**EP 3 337 167 A1**

# INTERNATIONAL SEARCH REPORT

| International application No. |
|---|
| **PCT/CN2016/083108** |

### A. CLASSIFICATION OF SUBJECT MATTER

H04N 7/18 (2006.01) i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, CNPAT, WPI, EPODOC: camera shooting, photographing, electronic compass, HIKVISION, video, monitor+, surveilliance, camera?, direction??, geographical, location, position, region, area, electronic, compass, gravity, sensor?, GPS, beidou

### C. DOCUMENTS CONSIDERED TO BE RELEVANT

| Category* | Citation of document, with indication, where appropriate, of the relevant passages | Relevant to claim No. |
|---|---|---|
| X | CN 104238582 A (ZHEJIANG UNIVERSITY et al.), 24 December 2014 (24.12.2014), description, paragraphs [0005] and [0008], and claim 1 | 1-13 |
| A | CN 103017740 A (TIANJIN YAAN TECHNOLOGY CO., LTD.), 03 April 2013 (03.04.2013), the whole document | 1-13 |
| A | CN 104320569 A (INFORMATION AND COMMUTATION BRANCH, STATE GRID HEILONGJIANG ELECTRIC POWER COMPANY LIMITED et al.), 28 January 2015 (28.01.2015), the whole document | 1-13 |
| A | CN 103220469 A (LIN, Ning), 24 July 2013 (24.07.2013), the whole document | 1-13 |
| A | US 2012317825 A1 (PENTAX RICOH IMAGING COMPANY, LTD.), 20 December 2012 (20.12.2012), the whole document | 1-13 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 June 2016 (12.06.2016) | **30 June 2016 (30.06.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer  **WANG, Conglei**  Telephone No.: (86-10) **62413236** |

Form PCT/ISA/210 (second sheet) (July 2009)

18

**INTERNATIONAL SEARCH REPORT**
Information on patent family members

| International application No. |
| --- |
| **PCT/CN2016/083108** |

| Patent Documents referred in the Report | Publication Date | Patent Family | Publication Date |
| --- | --- | --- | --- |
| CN 104238582 A | 24 December 2014 | None | |
| CN 103017740 A | 03 April 2013 | None | |
| CN 104320569 A | 28 January 2015 | None | |
| CN 103220469 A | 24 July 2013 | None | |
| US 2012317825 A1 | 20 December 2012 | JP 2013003259 A | 07 January 2013 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510501653